# EUROPÄISCHE PATENTSCHRIFT

(11) **EP 1 140 691 B1**
(45) Veröffentlichungstag und Bekanntmachung des Hinweises auf die Patenterteilung: **15.01.2003**
(21) Anmeldenummer: 99958011.1
(22) Anmeldetag: 09.11.1999
(51) Int. Cl.: B67C 3/24, B65G 47/51

(54) **VORRICHTUNG ZUM TRANSPORT VON FLASCHEN**
DEVICE FOR TRANSPORTING BOTTLES
DISPOSITIF DE TRANSPORT DE BOUTEILLES

(30) Priorität: 07.12.1998 DE 29821746 U
(43) Veröffentlichungstag der Anmeldung: 10.10.2001
(73) Patentinhaber: GEA Finnah GmbH, 48683 Ahaus (DE)
(72) Erfinder: SCHMIDT, Andreas, D-48683 Ahaus (DE); NIEHR, Thomas, D-48683 Ahaus (DE)
(74) Vertreter: Busse & Busse Patentanwälte
(86) Internationale Anmeldenummer: EP9908563
(87) Internationale Veröffentlichungsnummer: WO00037353

(56) Entgegenhaltungen:
- DE-A- 19 702 770

## Beschreibung

Die Erfindung bezieht sich auf eine Vorrichtung zum Transport von Flaschen mit im Halsbereich vorgesehenem Tragring, insbesondere PET-Flaschen, entlang einer vorgegebenen Bewegungsbahn durch Bearbeitungstationen einer Bearbeitungsanlage, insbesondere Flaschenfüllanlage, in einer Ausbildung gemäß dem Oberbegriff des Anspruchs 1.

Bei einer bekannten Transportvorrichtung der eingangs genannten Art (DE 197 02 770 A1) werden die Flaschen mittels eines mit einer schlitzförmigen Halterung für jede Flasche versehenen Trägers transportiert. Die Flaschen nehmen dabei während des gesamten Transports eine unveränderliche durch die Halterungen des Trägers bestimmte gegenseitige Lage ein.

Die Erfindung befaßt sich mit dem Problem, eine Transportvorrichtung der genannten Art zu schaffen, die mit einfachen Mitteln einen zuverlässigen Flaschentransport entlang der Bewegungsbahn sichert und dabei eine exakte Positionierung der Flaschen auf ihrem Weg durch die Bearbeitungsstationen gewährleistet. Die Erfindung löst dies durch eine Transportvorrichtung mit den Merkmalen des Anspruchs 1. Hinsichtlich wesentlicher weiterer Vorteile wird auf die Ansprüche 2 bis 12 verwiesen.

Die Transportvorrichtung nach der Erfindung ermöglicht eine schnelle und sichere Übergabe von eine Flaschenreihe bildenden Flaschengruppen an die Trägerleisten, in denen die Flaschen einer Reihe zueinander in ihrem Abstand veränderbar abgestützt sind, so daß die Flaschen nach dem Übergang an die Trägerleisten exakt ausgerichtet werden können, um die in den Bearbeitungsstationen erforderlichen Positionen einnehmen zu können. Die Führungsleisten bilden dabei übeaus einfache Positionierungsmittel, die ihre Positionierungsaufgaben auch bei hoher Transportleistung sicher erfüllen können. Dabei übernehmen die Führungsleisten auch eine Sicherung der Flaschen gegen ungewolltes Herauslösen aus ihren Transportöffnungen während des Transports.

Weitere Einzelheiten und Wirkungen ergeben sich aus der nachfolgenden Beschreibung und der Zeichnung, in der zwei Ausführungsbeispiele des Gegenstands der Erfindung schematisch näher veranschaulicht sind. In der Zeichnung zeigen:
- Fig. 1: eine abgebrochene Seitenansicht des Einlaufbereiches einer Bearbeitungsanlage mit einer ersten Ausführung einer Transportvorrichtung nach der Erfindung,
- Fig. 2: eine Seitenansicht ähnlich Fig. 1 des Endbereiches der Bearbeitungsanlage nach Fig. 1,
- Fig. 3: eine vereinfachte Draufsicht zu Fig. 1,
- Fig. 4: eine vereinfachte Draufsicht zu Fig. 2,
- Fig. 5: eine Einzelheit V in Fig. 3 in Vergrößerung,
- Fig. 6: eine Einzelheit VI in Fig. 4 in Vergrößerung,
- Fig. 7: einen Schnitt nach der Linie VII-VII in Fig. 2,
- Fig. 8: eine abgebrochene Seitenansicht ähnlich Fig. 1 des Einlaufbereiches einer Bearbeitungsanlage mit einer zweiten Ausführung einer Transportvorrichtung nach der Erfindung,
- Fig. 9: eine Seitenansicht ähnlich Fig. 2 der Bearbeitungsanlage nach Fig. 8,
- Fig. 10: eine vereinfachte Draufsicht zu Fig. 8,
- Fig. 11: eine vereinfachte Draufsicht zu Fig. 9,
- Fig. 12: eine Einzelheit XII in Fig. 11 in Vergrößerung,
- Fig. 13: eine Einzelheit XIII in Fig. 11 in Vergrößerung,
- Fig. 14: eine Darstellung der Anlage im Schnitt nach der Linie XIV-XIV in Fig. 9, und
- Fig. 15: eine Darstellung der Anlage im Schnitt nach der Linie XV-XV in Fig. 9.
- Fig. 16: eine Draufsicht auf zwei Trägerleisten mit abgewandelten Einzelöffnungen.

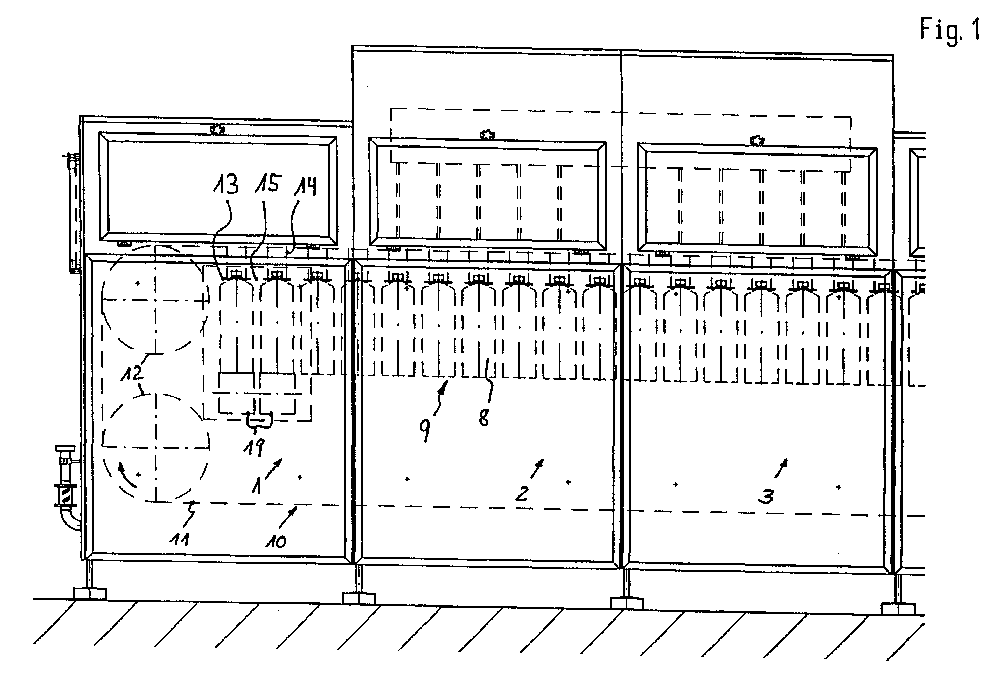

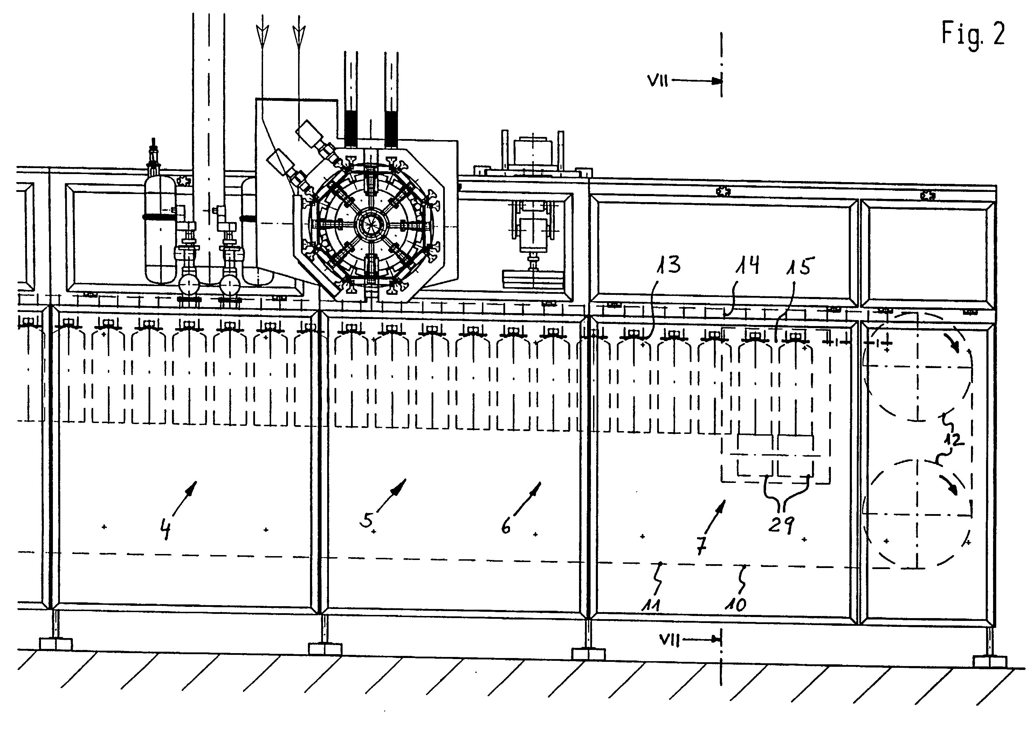

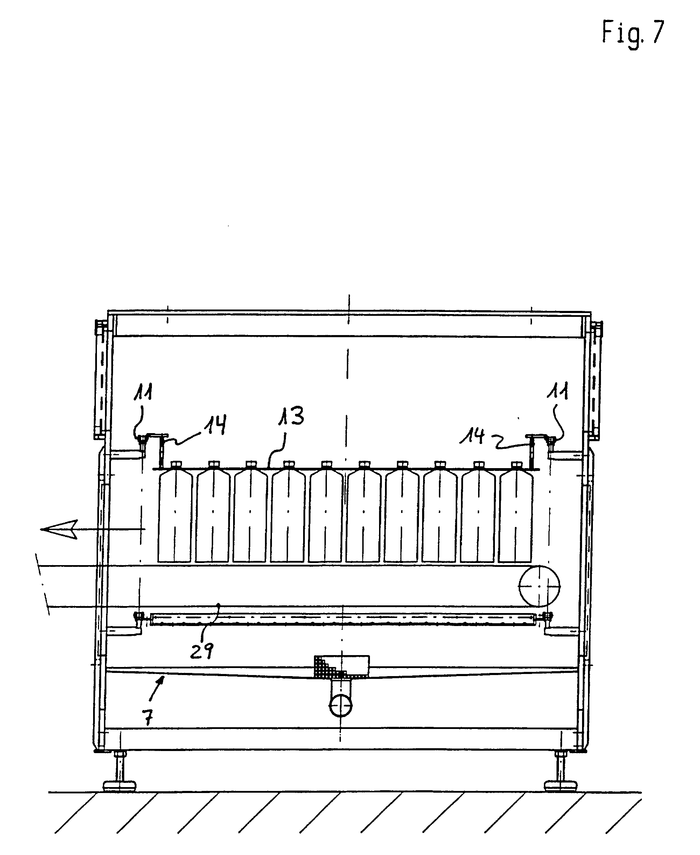

Die in den Figuren 1 bis 7 veranschaulichte Bearbeitunganlage für Flaschen dient beispielsweise zu deren Sterilisation und Befüllung, kann jedoch irgendeine beliebige Bearbeitungsstation oder beliebige Kombinationen aus Bearbeitungsstationen umfassen, wie dies im Einzelfalle wünschenswert ist. Die dargestellte Bearbeitungsanlage umfaßt eine gekapselte Flaschenaufgabestation 1, Sterilisations- und Trocknungsstationen 2,3, eine nicht dargestellte Befüllstation, eine Station 4 zur Zugabe von flüssigem CO₂ od.dgl. flüssigen oder gasförmigen Zusätzen, eine Deckelauflegestation 5, eine Verschließstation 6 und eine Flaschenabgabestation 7. Sämtliche Stationen sind gekapselt, und die kapselnden Gehäuseteile umschließen einen Förderkanal, in dem zumindest abschnittsweise sterile Atmosphäre herrscht.

Zum Transport der zu bearbeitenden Flaschen 8, von denen jeweils eine Mehrzahl zu einer Gruppe 9 in einer quer zur Bewegungsrichtung ausgerichteten Reihe zusammengefaßt sind, dient ein Endlosförderer 10 mit außenseitigen Förderketten 11 od.dgl. Antriebsgliedern, die Kettenräder 12 od.dgl. Führungsräder umlaufen. Zwischen den Förderketten 11 erstrecken sich quer zur Bewegungsrichtung ausgerichtete Träger, welche die Gestalt einer zellenbrettartigen, flachen Trägerleiste 13 aufweisen. Die Trägerleisten 13 sind über Verbindungsstücke 14 mit den Förderketten 11 verbunden und laufen im Arbeitstrum des Förderers 10 in einer horizontalen, etwas unterhalb der Kettenebene gelegenen Bewegungsebene 15 von der Flaschenaufgabestation 1 zur Flaschenabgabestation 7. Die Förderketten 11 sind über ihre gesamte Länge mit Trägerleisten 13 bestückt, die dabei in gleichem gegenseitigen Abstand zueinander verlaufen.

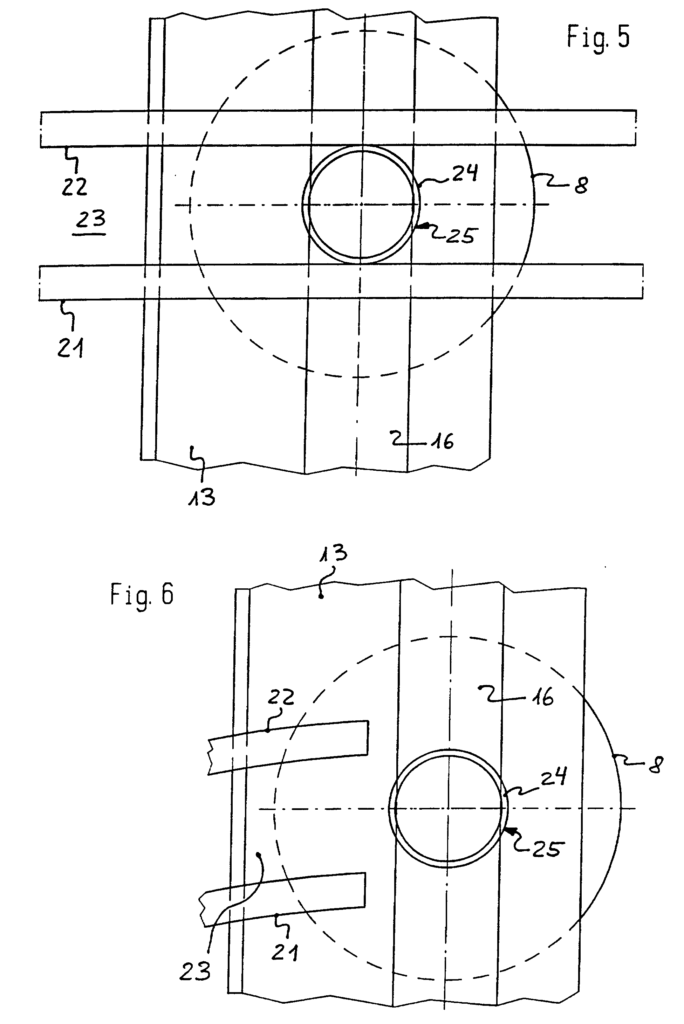

Bei der Ausführung nach Fig. 1 bis 7 haben die Trägerleisten 13 einen sich im wesentlichen über deren gesamte Länge erstreckenden Längsschlitz 16, der an seinem einen Ende 17 geschlossen und an seinem anderen Ende 18 offen ist. Dem geschlossenen Ende 17 ist dabei ein verstellbarer Anschlag 17' zugeordnet, der die Lage der jeweils ersten Flasche 8 eine in die Trägerleiste eingeförderten Flaschenreihe 9 begrenzt Dieser Längsschlitz bildet eine durchgehende Öffnung 16 für die gemeinsame Aufnahme der Flaschen 8 einer Flaschenreihe oder -gruppe 9 dergestalt, daß jede Flasche 8 mit ihrem Hals in der Öffnung 16 der Trägerleiste 13 hängend abgestützt ist, wobei bei der am Flaschenhals 25 der Flaschen 8 vorgesehene Tragring 24 den Öffnungsrand der Öffnung 16 in der Trägerleiste 13 übergreift (Fig. 5 und 6). Die derart in die Trägerleisten 13 eingehängten Flaschen 8 stehen mit ihrem an die Füllöffnung angrenzenden Halsteil 25 über die Trägerleiste 13 nach oben vor.

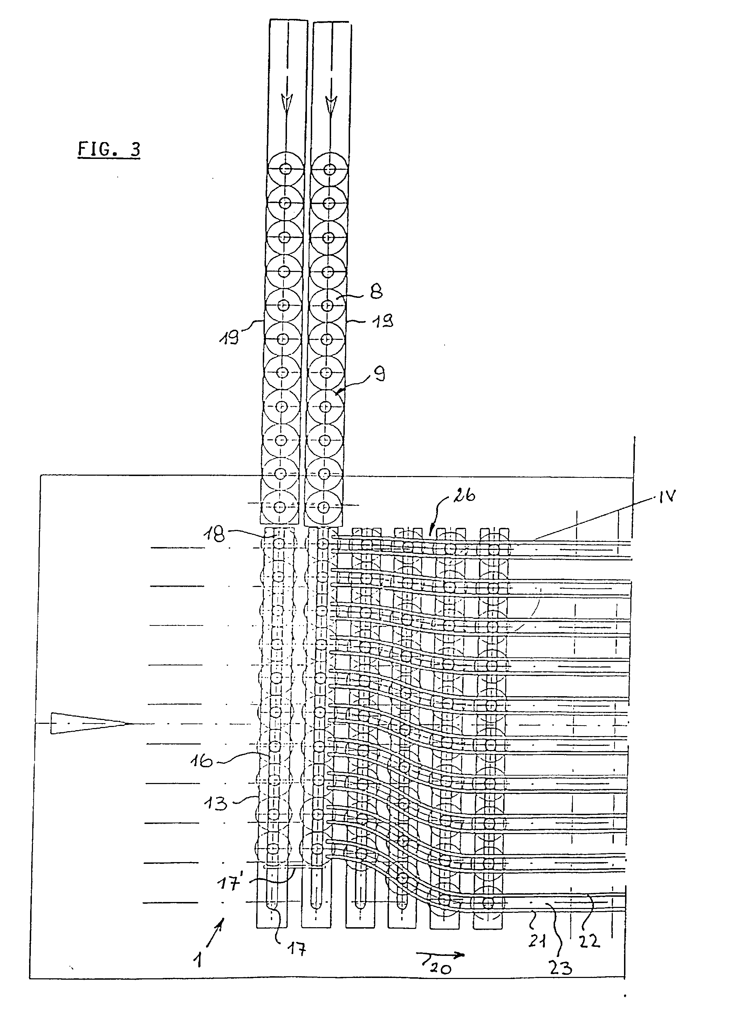

Die Zufuhr von Flaschen 8 in jeweils zwei Gruppen 9 in die Flaschenaufgabestation erfolgt mit Hilfe von Förderern 19, die als Förderbänder ausgebildet sein, aber auch jede sonst geeignete Ausgestaltung haben können. Die aneinandergrenzend hintereinander herangeförderten Flaschen 8 werden in die beiden in der Flaschenaufgabestation 1 im Stillstand befindlichen Trägerleisten 13 eingefädelt, wonach der Endlosförderer 10 in Bewegungsrichtung 20 (Fig. 3) in Bewegung versetzt wird. Hierfür sind geeignete Antriebsmotoren vorgesehen, die auf die Kettenräder 12 einwirken, jedoch nicht näher dargestellt sind.

Oberhalb der Bewegungsebene 15 der Trägerleisten 13 auf deren Weg zwischen Flaschenaufgabe- und Flaschenabgabestation 1 bis 7 sind eine Anzahl von Führungsleisten 21,22 vorgesehen, die jeweils paarweise untereinander und dabei zur Bewegungsebene 15 parallel verlaufen und zwischen sich Führungsbahnen 23 für die über die Trägerleisten 13 vorstehenden und zwischen die Führungsleisten 21,22 zwischengreifenden Halsteile 25 der Flaschen 8 begrenzen. Für jede Flasche 8 einer Flaschenreihe 9 ist ein gesondertes Paar Führungsleisten 21,22 vorgesehen. Dabei liegen die Führungsbahnen an ihren der Flaschenaufgabestation 1 benachbarten Enden den Flaschenhälsen 25 von aneinanderangrenzend in der Reihe nebeneinander angeordneten Flaschen 8 gegenüber. Die Führungsbahnen 23 gehen dann in dem an ihre Einlaufenden angrenzenden Bereich 26 in einem bogenförmigen Verlauf auf vergrößerte, nachfolgend gleichmäßig verbleibende Abstände zueinander über, wie sie die Flaschen 8 bei ihrer Bearbeitung in den nachfolgenden Bearbeitungsstationen einnehmen sollen, um eine einwandfreie Bearbeitung sicherzustellen.

In gleicher Weise werden im Bereich 27 unmittelbar vor den der an die Flaschenabgabestation 7 angrenzenden Enden der Führungsleisten 21,22 die Führungsbahnen 23 durch einen bogenförmigen Verlauf so zusammengeführt, daß die Flaschen 8 einer Reihe 9 bei der Abgabe wieder eine aneinandergrenzende Position einnehmen.

Bei Bewegung einer jeden Trägerleiste 13 werden dementsprechend die Flaschen 8 in dieser Trägerleiste 13 auf Abstand zueinander überführt und nach Passieren der letzten Bearbeitungsstation wieder zusammengeführt, wie das für eine weitere Handhabung erwünscht ist. In jeder Phase der Bearbeitung nehmen die Flaschen 8 nicht nur eine genaue Position innerhalb ihrer Reihe 9 ein, sie sind auch durch das Zusammenwirken der Ränder der Öffnung 16 in den Trägerleisten 13 und der Führungsleisten 21,22 gegen ungewolltes Ablösen von den Trägerleisten 13 gesichert.

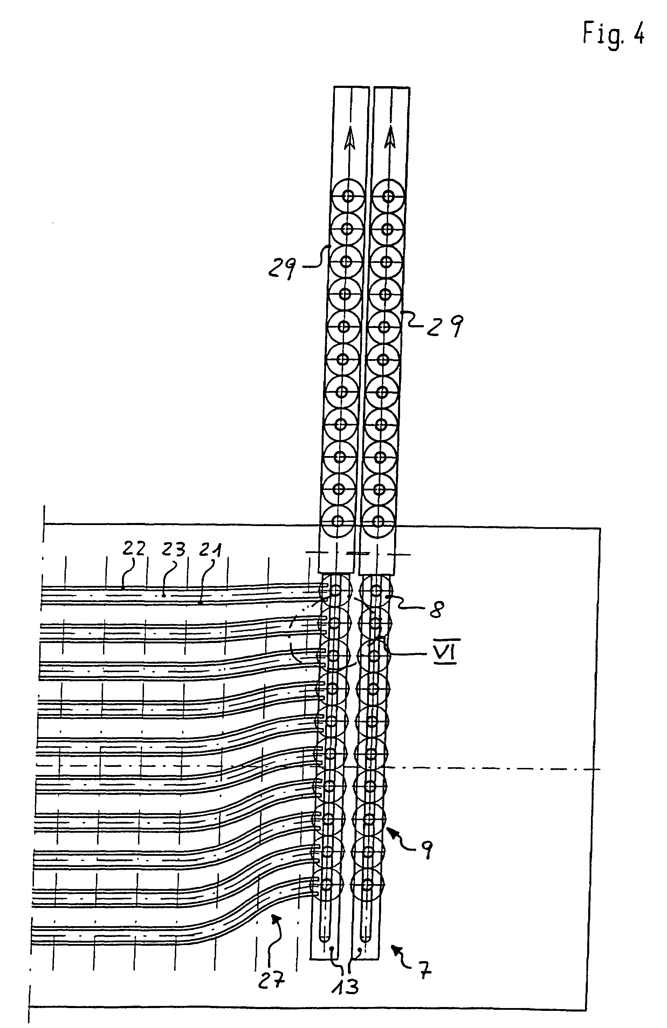

Nach Zusammenführen der Flaschen in dem an die Flaschenabgabestation 7 angrenzenden Bereich bewegen sich die Flaschen 8 mit ihren Flaschenhälsen 25 aus den Führungsbahnen 23 heraus, und in der in Fig. 4 veranschaulichten Abgabestellung befinden sich die Flaschen 8 oberhalb von Förderern 29, z.B. Bandförderern, die nach einem geringfügigen Anheben der Flaschen 8 diese aus den Längsschlitzen 16 der beiden über ihnen befindlichen Trägerleisten 13 herausfördern.

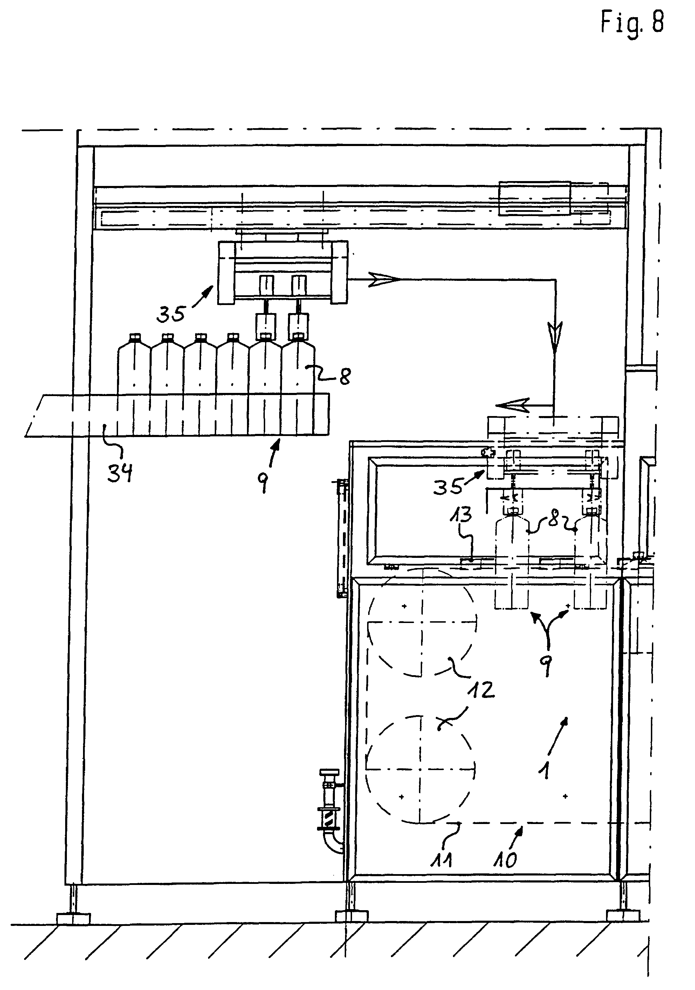

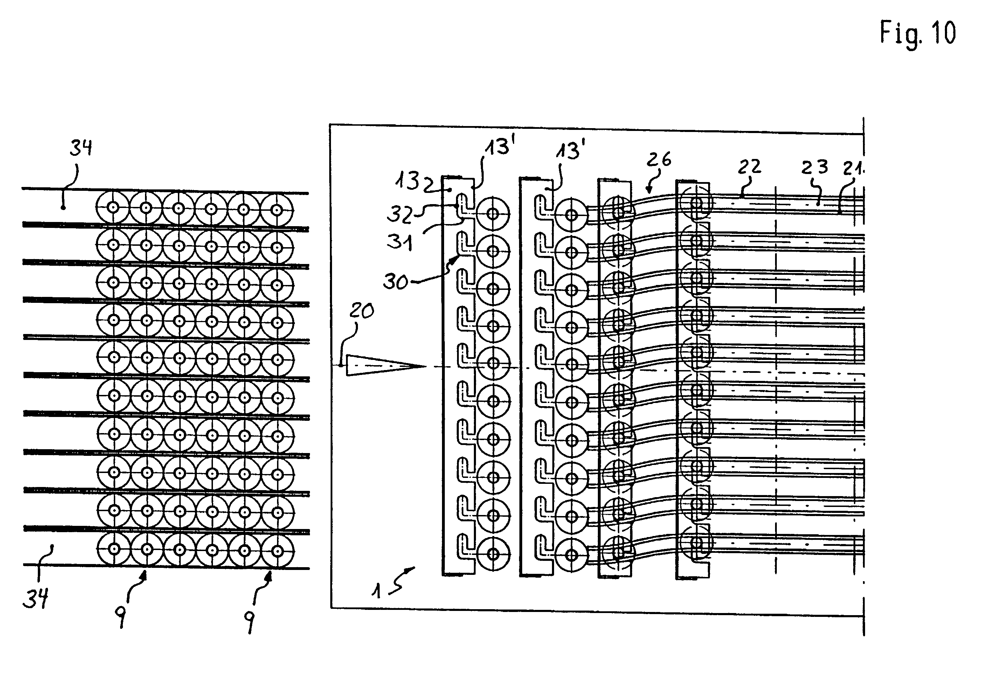

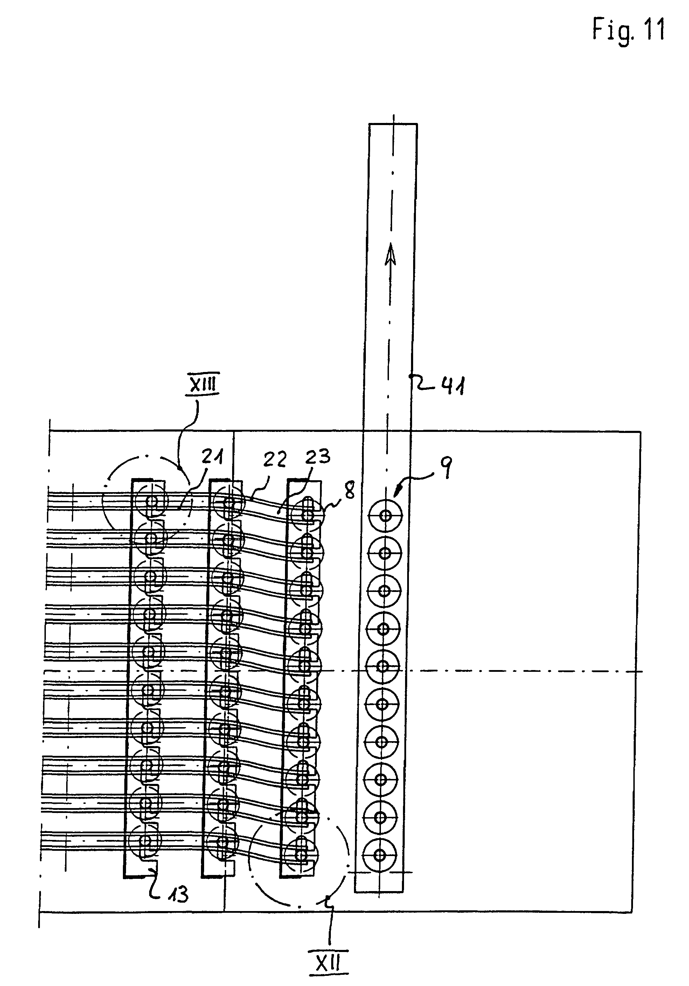

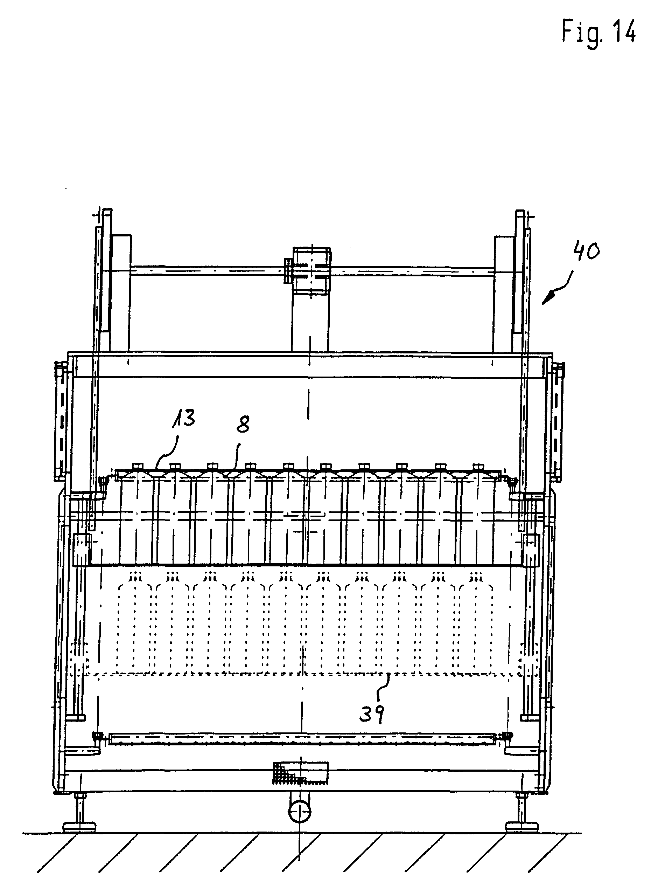

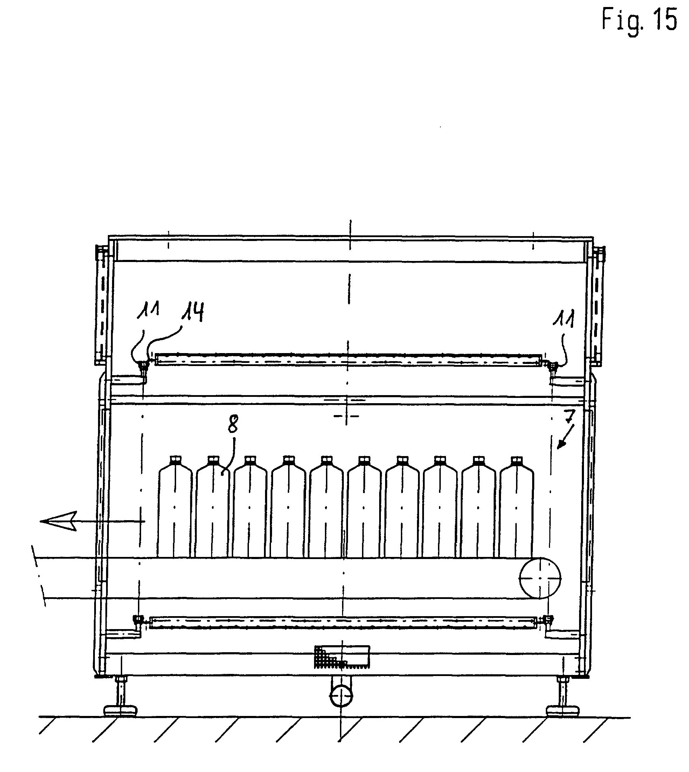

Die in den Fig. 8 bis 15 veranschaulichte Bearbeitungsanlage entspricht im wesentlichen der nach Fig. 1 bis 7, so daß übereinstimmende Bauteile mit gleichen Bezugszeichen versehen sind. Abweichend ist die Ausbildung der Trägerleisten 13, die in diesen vorgesehene Einzelöffnungen 30 für die Aufnahme jeweils einer einzelnen Flasche 8 aufweisen. Dementsprechend haben die Trägerleisten 13 eine der Anzahl der Flaschen 8 in einer Reihe entsprechende Anzahl von z.B. 10 Einzelöffnungen 30, die bei der Ausführung gemäß Fig. 10 in Draufsicht L-förmig ausgebildet sind. Jede Einzelöffnung 30 hat dabei einen ersten, parallel zur Bewegungsrichtung 20 der Trägerleisten 13 ausgerichteten und an eine Längsrandkante 13' der Trägerleiste 13 angrenzenden Schenkel 31 als Ein- und Auslaufteil und einen sich quer zur Bewegungsrichtung 20 der Trägerleisten 13 erstreckenden zweiten Schenkel 32 als Endaufnahmeteil. Das offene Ende des ersten Schenkels 31 der L-förmigen Einzelöffnungen 30 ist dabei der in Bewegungsrichtung 20 vorlaufenden Randkante 13' der Trägerleisten 13 zugewandt.

Die Flaschen 8 werden paralllel zur Bewegungsrichtung 20 des Endlosförderers 10 in seinem Arbeitstrum der Flaschenaufgabestation 1 zugeführt, und die beiden jeweils ersten Reihen 9 von Flaschen 8 werden mittels eines Umsetzgreifers 35 aus den Förderbahnen 34 herausgehoben und den beiden zu bestückenden Trägerleisten 13 in der Flaschenaufgabestation 1 jeweils auf der Seite ihrer in Bewegungsrichtung 20 blickenden Randkante 13' zugeführt, wie dies die Fig. 8 und 10 veranschaulichen. Mit Hilfe des Umsetzgreifers 35 werden dabei die Flaschen 8 mit ihren Hälsen 25 in den ersten Schenkel 31 der jeweiligen Einzelöffnungen 30 eingeführt, womit der Übergabevorgang beendet ist.

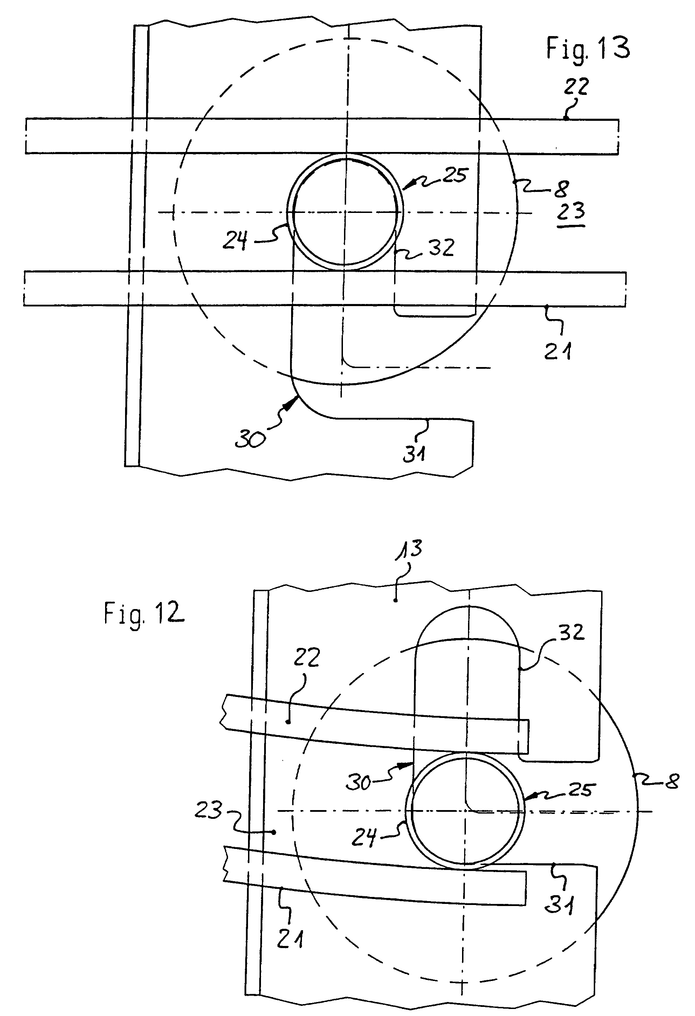

Bei Bewegung der so bestückten Trägerleisten 13 in Richtung zur nächsten Bearbeitungsstation gelangen die über die Trägerleisten 13 nach oben vorstehenden Flaschenhalsteile 25 wiederum in die Einlaufenden der Führungsbahnen 23, die in dem sich an die Einlaufenden anschließenden Bereich 26 die Flaschen auf Bearbeitungsabstand überführen, wobei die Flaschenhalsteile 25 in den zweiten Schenkel 32 der Einzelöffnungen 30 gedrückt werden (Fig. 13). Am Ende der Bearbeitungsstrecke werden dann die Flaschen 8 durch die Führungsbahnen 23 in deren Bereich 27 wieder in eine aneinandergrenzende Position überführt, wobei die Flaschenhalsteile 25 wieder aus dem zweiten Schenkel 32 zurück in eine mit dem ersten Schenkel 31 fluchtende Stellung gelangen (Fig. 12).

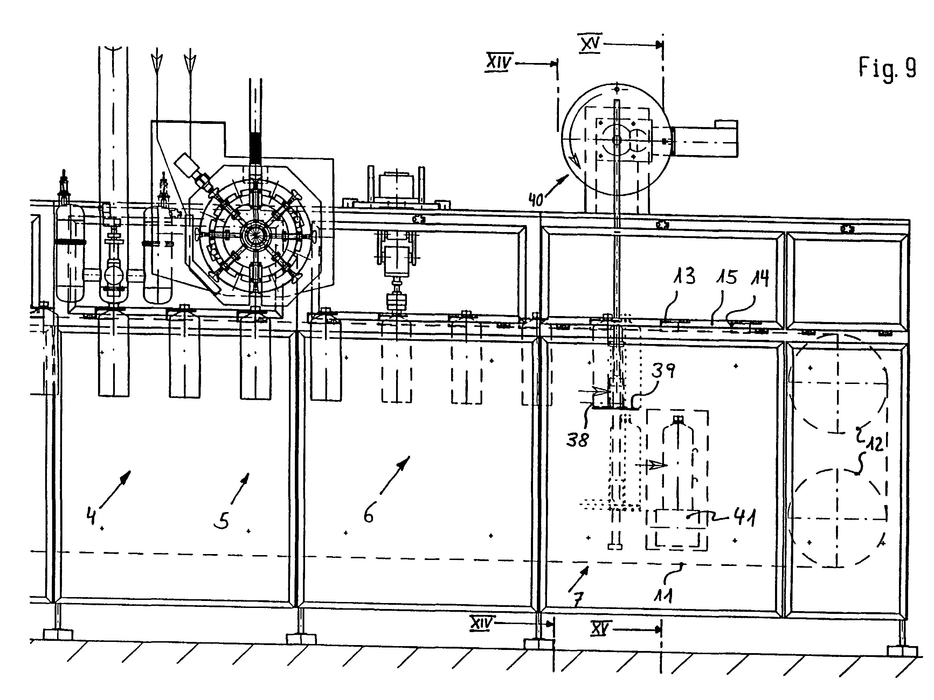

In der Flaschenabgabestation 7 werden die Flaschen 8 einer Reihe 9 gemeinschaftlich durch einen lediglich schematisch bei 38 (Fig. 9) angedeuteten Stößel bzw. Schieber auf einen Träger 39 aus dem Schenkel 31 der Einzelöffnungen 30 ausgeschoben und umgesetzt, der mittels eines Exzenterantriebs 40 aus einer oberen Annahmestation in eine gestrichelt in Fig. 9 angedeutete untere Abgabestation überführt wird, wo die Flaschen erneut durch einen nicht näher veranschaulichten Stößel oder Schieber auf einen Förderer 41 umgesetzt werden, mit dem die Flaschen 8 der umgesetzten Reihe 9 in Querrichtung aus der Anlage herausgefördert werden.

Auch bei dieser Ausführung mit Einzelöffnungen 30 für jeweils eine Flasche 8 einer Reihe 9 ist durch das Zusammenwirken mit den Führungsleisten 21,22 und den Rändern der Einzelöffnungen 30 sichergestellt, daß die Flaschen nicht nur während ihres Durchlaufs durch die Bearbeitungsstation(en) eine exakte Abstandsposition zueinander einnehmen, sondern auch gegen ein ungewolltes Herauslösen aus den Trägerleisten 13 gesichert sind. Auch diese Anlage kann mit hoher Fördergeschwindigkeit sicher betrieben und einfach mit Flaschen beund entladen werden.

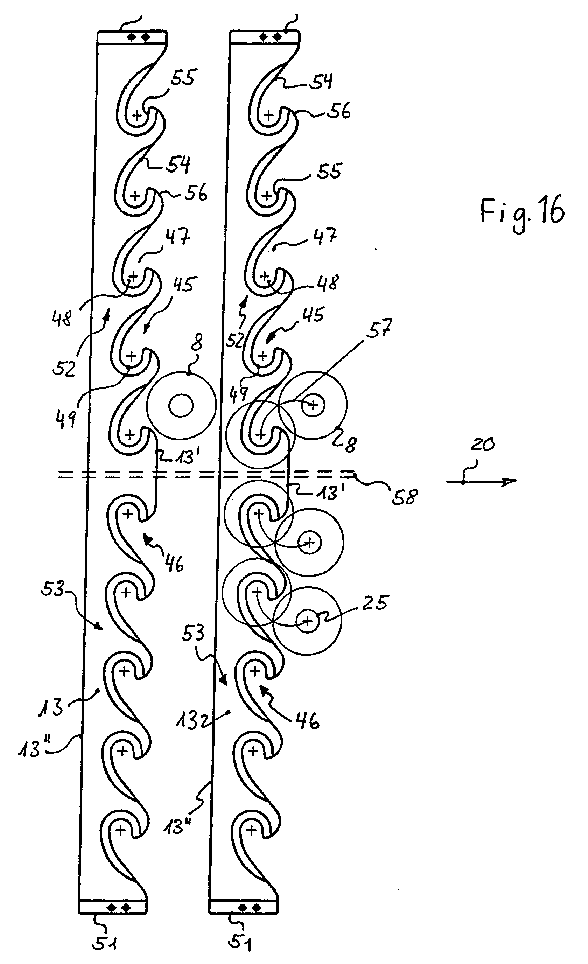

Bei der Ausführung der in Fig. 16 dargestellten, abgewandelten Trägerleisten 13 haben die in diesen jeweils vorgesehenen Einzeiöffnungen 45 bzw 46 einen Einlaufteil 47 und einen Endteil 48 für die Aufnahme der Flaschenhalsteile 25 der Flaschen 8 bei deren Transport. Der Endteil 48 ist dabei als etwa halbkreisförmiger Transportsitz ausgebildet, dessen geschlossene Seite 49 jeweils einem der Stirnenden 50,51 der Trägerleiste 13 zugewandt ist. Die Einzelöffnungen 45 bzw. 46 gehören dabei jeweils zu einer von zwei spiegelbildlich zueinander ausgerichteten Gruppen 52,53, innerhalb derer die geschlossenen Seiten 49 der Endteile 48 jeweils dem einen oder dem anderen Stirnende 50 bzw. 51 zugewandt sind.

Der Ein-und Auslaufteil 47 der Einzelöffnungen 45,46 ist von einen bogenförmigen Schlitz bildenden Öffnungsrändern 54,55 begrenzt, die jeweils von dem Endteil 48 zu der in Bewegungsrichtung 20 der Trägerleisten 13 beim Transport blickenden Längsrandkante 13' führen. Dabei ist der eine auf der Seite der geschlossenen Längsrandkante 13" der Trägerleiste 13 vom Endteil 48 der Einzelöffnungen 45,46 ausgehende, innere Öffnungsrand 54 in einer langgezogenen Bogenlinie zur offenen Längsrandkante 13' der Trägerleiste 13 geführt. Bei Erreichen der offenen Längsrandkante 13' der Trägerleiste 13 geht diese langgezogene Bogenlinie der inneren Öffnungsrandkante 54 in eine gegenläufige Bogenlinie 56 über, die auf den äußeren Öffnungsrand 55 des Ein-und Auslaufteils 47 einer benachbarten Einzelöffnung 45 bzw.46 zuläuft und nahe dem Endteil 48 in den äußeren Öffnungsrand 55 übergeht.

Diese besondere Gestaltungsform der Trägerleisten 13 mit ihren Einzelöffnungen 45,46 ermöglicht es, die Flaschen 8 mit ihrem Flaschenhalsteil 25 in einer durch den Bewegungsbogen 57 angedeuteten, einfachen Schwenkbewegung nicht nur in die Trägerleiste 13 einzuführen, sondern bis in den Endteil 48 und damit in die Endposition zu überführen, so daß es grundsätzlich möglich ist, Führungsleisten vorzusehen, die gerade ausgebildet sind und lediglich die Aufgabe haben, die Flaschenhalsteile 25 der Flaschen 8 während des Transports in ihrer Endposition im Endteil 48 der Trägerleisten 13 zu fixieren. Die Aufteilung der Einzelöffnungen 45,46 auf spiegelbildliche Gruppen 52,53 in der Trägerleiste 13 macht es möglich, die Trägerleisten 13 auf einer durchgehenden, festen Unterstützung 58, z.B. einer Stützschiene, beim Durchlaufen der Bearbeitungsstrecke abzustützen, wobei der Abstand der der Abstützung 58 benachbarten Flaschen 8 unverändert und gleich dem Abstand der übrigen Flaschen 8 zueinander gehalten werden kann.

Während bei der Schlitzöffnung 16 bei der Ausführung nach Fig. 1 bis 7 und den Einzelöffnungen 30 bei der Ausführung nach den Fig. 8 bis 15 die Flaschen 8 während Ihres Transports durch die Trägerleisten 13 in Richtung quer zur Bewegungsrichtung 20 der Trägerleisten 13 ausgerichtet, d.h. auseinandergezogen und wieder zusammengeschoben werden können, bietet die Ausführung nach Fig. 16 die Möglichkeit, die Flaschen 8 mit einer einzigen Schwenkbewegung in die Trägerleisten 13 einzusetzen und in eine Endposition zu überführen, die während des weiteren Transports unverändert bleibt. Auch die Entnahme der Flaschen am Ende der Behandlungsstrecke aus den Trägerleisten 13 ist außerordentlich einfach und mit einer entsprechenden gegenläufigen Schwenkbewegung durchführbar.

## Patentansprüche

1. Vorrichtung zum Transport von Flaschen mit im Halsbereich vorgesehenem Tragring, insbesondere PET-Flaschen, entlang einer vorgegebenen Bewegungsbahn durch Bearbeitungsstationen (2,3,4,5,6) einer Bearbeitungsanlage, insbesondere Flaschenabfüllanlage, bei der jeweils eine Anzahl von Flaschen (8) in einer Reihe (9) quer zur Bewegungsrichtung (20) gruppiert, von einem Träger (13) transportiert und relativ zu diesem positioniert werden, wobei die Träger (13) durch Förderketten (11) o. dgl. Antriebsmittel in gleichmäßigen Abständen hintereinander von einer Flaschenaufgabestation (1) vorbei an zumindest einer Bearbeitungsstation, insbesondere Befüllstation, zu einer Flaschenabgabestation (7) und von dort leer zurück zur Flaschenaufgabestation (1) bewegbar sind und wobei als Träger für eine Reihe (9) von Flaschen (8) eine zellenbrettartige flache Trägerleiste (13) vorgesehen ist, jede Flasche (8) mit einem Tragring (24) an ihrem Hals (25) in einer Öffnung (16;30) der Trägerleiste (13) hängend abgestützt ist, der den Öffnungsrand der Öffnung (16;30) in der Trägerleiste (13) übergreift, **dadurch gekennzeichnet, daß** oberhalb der Bewegungsebene (15) der Trägerleisten (13) auf deren Weg zwischen Flaschenaufgabe- und Flaschenabgabestation (1;7) parallel nebeneinander angeordnete, zur Bewegungsebene (15) parallele Führungsleisten (21,22) vorgesehen sind, die zwischen sich Führungsbahnen (23) für die über die Trägerleisten (13) vorstehenden und zwischen die Führungsleisten (21,22) zwischengreifenden Halsteile (25) der Flaschen (8) begrenzen.

2. Vorrichtung nach Anspruch 1, **dadurch gekennzeichnet, daß** die Trägerleisten (13) einen sich im wesentlichen über deren gesamte Länge erstreckenden, einseitig offenen Längsschlitz (16) aufweisen, der eine Öffnung für die gemeinsame Aufnahme der Flaschen (8) einer Flaschenreihe (9) bildet.

3. Vorrichtung nach Anspruch 2, **dadurch gekennzeichnet, daß** dem geschlossenen Ende (17) des Längsschfitzes (16) ein verstellbarer Anschlag (17') zugeordnet ist, der die Endlage der ersten der hintereinander von der Seite her in den Längsschlitz (16) der Trägerleiste (13) eingeförderten Flasche (8) der Flaschenreihe (9) definiert.

4. Vorrichtung nach Anspruch 1, **dadurch gekennzeichnet, daß** die Trägerleisten (13) eine der Anzahl der Flaschen (8) in einer Reihe (9) entsprechende Anzahl von Einzelöffnungen (30,45,46) für die Flaschen (8) aufweisen.

5. Vorrichtung nach Anspruch 4, **dadurch gekennzeichnet, daß** die Einzelöffnungen einen von einer Längsrandkante (13') der Trägerleiste (13) ausgehenden Ein-und Auslaufteil (31;47) und einen Endteil (32;48) für die Aufnahme der Flaschenhalsteile (25) beim Transport aufweisen.

6. Vorrichtung nach Anspruch 5, **dadurch gekennzeichnet, daß** die Einzelöffnungen (30) in Draufsicht L-förmig ausgebildet sind und einen ersten, parallel zur Bewegungsrichtung (20) der Trägerleisten (13) beim Transport ausgerichteten und an eine Längsrandkante (13') der Trägerleiste (13) angrenzenden Schenkel (31) als Ein- und Auslaufteil und einen sich quer zur Bewegungsrichtung (20) der Trägerleisten (13) erstreckenden zweiten Schenkel (32) als Endteil aufweisen.

7. Vorrichtung nach Anspruch 6, **dadurch gekennzeichnet, daß** das offene Ende des ersten Schenkels (31) der L-förmigen Einzelöffnungen (30) der in Bewegungrichtung (20) vorderen Längsrandkante (13') der Trägeleiste (13) zugewandt ist.

8. Vorrichtung nach Anspruch 4 oder 5, **dadurch gekennzeichnet, daß** der Endteil (48) als etwa halbkreisförmiger Transportsitz ausgebildet ist, dessen geschlossene Seite (49) einem Stirnende (50,51) der Trägerleiste (13) zugewandt ist, und der Ein- und Auslaufteil von zu einer Längsrandkante (13') des Trägerteils (13) führenden, einen bogenförmigen Schlitz bildenden Öffnungsrändern (54,55) begrenzt ist.

9. Vorrichtung nach Anspruch 8, **dadurch gekennzeichnet, daß** der eine auf der Seite der geschlossenen Längsrandkante (13") der Trägerleiste (13) vom Endteil (48) ausgehende, innere Öffnungsrand (54) in einer langgezogenen Bogenlinie zur offenen Längsrandkante (13') der Trägerleiste (13) geführt ist.

10. Vorrichtung nach Anspruch 9, **dadurch gekennzeichnet, daß** der innere Öffnungsrand (54) bei Erreichen der offenen Längsrandkante (13') der Trägerleiste (13) in eine gegenläufige Bogenlinie (56) übergeht, die auf den äußeren Öffnungsrand (55) des Ein- und Auslaufteils (47) einer benachbarten Einzelöffnung (45,46) zuläuft und nahe dem Endteil (48) in den äußeren Öffnungsrand (55) übergeht.

11. Vorrichtung nach einem der Ansprüche 4 bis 10, **dadurch gekennzeichnet, daß** die Einzelöffnungen (30) zwei spiegelbildlich zueinander ausgerichteten Gruppen (52,53) zugeordnet sind, wobei die geschlossenen Seiten (49) der Endteile (48) der einen Gruppe (52) dem einen Stirnende (50) und die der anderen Gruppe (53) dem anderen Stirnende (51) der Trägerleiste (13) zugewandt sind.

12. Vorrichtung nach einem der Ansprüche 1 bis 11, **dadurch gekennzeichnet, daß** die Führungsleisten (21,22) Führungsbahnen (23) begrenzen, die an ihren der Flaschenaufgabestation (1) benachbarten Einlaufenden den Flaschenhälsen (25) von aneinander angrenzenden Flaschen (8) in der Reihe (9) gegenüberliegen, die Führungsbahnen (23) in dem an die Einlaufenden der Führungsleisten (21,22) angrenzenden Bereich (26) durch einen bogenförmigen Verlauf auf Abstände zueinander übergehen, die einem vorgegebenen Abstandsmaß der Flaschenhälse (25) der Flaschen (8) einer Reihe (9) in den Bearbeitungsstationen entsprechen, und daß im Bereich (27) der an die Flaschenabgabestation (7) angrenzenden Auslaufenden der Führungsleisten (21,22) die Führungsbahnen (23) durch einen bogenförmigen Verlauf so zusammengeführt werden, daß die Flaschen (8) einer Reihe (9) bei der Abgabe wieder eine aneinandergrenzende Position einnehmen.

## Claims

1. Device for the transport of bottles, especially PET-bottles, provided with a support ring in the neck area along a pre-determined travel path through processing stations (2, 3, 4, 5 6) of a processing line, especially a filling line, whereby a number of bottles (8) in a row (9) grouped at right-angles to the direction of movement (20) is transported by a carrier (13) and positioned relative to this such that the carriers (13) separated at equal distances from one another can be conveyed by drive chains 11 or a similar drive mechanism from one bottle feeding station (1) past at least one processing station, especially a filling station, to a bottle discharge station (7) and from there back to the bottle feeding station (1) in an empty condition(1) and where a flat carrying board (13) with cell-like openings is provided as a carrier for a row (9) of bottles (8), each bottle being suspended from a carrying ring (24) around its neck (25) located in an opening (16; 30) in the carrying board (13) with the ring resting upon the edge of the opening (16; 30) **characterised in that** above the movement plane (15) of the carrying boards (13) between the bottle feeding station and the bottle discharge station (1; 7) guide rails (21, 22) are arranged parallel to one another and parallel to the plane of movement (15) which between them demarcate the guide ways (23) for the neck-elements (25) of the bottles (8) which protrude above the carrying boards (13) and are held between the guidance rails (21 / 22).

2. Device in accordance with claim 1, **characterised in that** the carrying boards (13) exhibit a longitudinal slot (16) open on one side which extends substantially over the whole length and which provides an opening for the common acceptance of the bottles (8) in a row (9).

3. Device in accordance with claim 2, **characterised in that** an adjustable stop (17') is arranged at the closed end (17) of the longitudinal slot (16) which defines the resting position of the first of the bottles (8) of the row of bottles (9) conveyed one behind the other from the side into the longitudinal slot (16) of the carrying board (13).

4. Device in accordance with claim 1, **characterised in that** the carrying boards (13) exhibit a number of individual openings 30; 45, 46 for the bottles (8), which corresponds to the number of bottles (8) in a row (9).

5. Device in accordance with claim 4, **characterised in that** the individual openings exhibit an inwardly and outwardly extending element (31; 47) running from the longitudinal edge (13') of the carrying board (13) and an end element (32; 48) for receiving the bottleneck elements (25) during transport.

6. Device in accordance with claim 5, **characterised in that** in plan view the individual openings (30) are L-shaped and exhibit a first limb (31) aligned parallel to the direction of movement (20) of the carrying board (13) and adjoining a longitudinal edge (13') of the carrying board (13) functioning as an entry- and discharge element during transport and a second limb (32) extending at right-angles to the direction of movement of the carrying boards (13) and functioning as an end element.

7. Device in accordance with claim 6, **characterised in that** the open end of the first limb (31) of the L-shaped individual openings (30) faces the front longitudinal edge (13') of the carrying board (13) in the direction of movement (20).

8. Device in accordance with claim 4 or 5, **characterised in that** the end element (48) has the shape of an approximately semi-circular transport seat, the closed side of which (49) is opposite to an end face (50, 51) of the carrying board (13) and the entry and discharge element is demarcated by opening edges (54, 55) forming a curved slot leading to a longitudinal edge (13') of the carrier element (13).

9. Device in accordance with claim 8, **characterised in that** the inner opening edge (54) extending from the end element (48) on the side of the closed longitudinal edge (13') of the carrying board (13) is guided along an elongated curve to the open longitudinal edge (13') of the carrying board (13).

10. Device in accordance with claim 9, **characterised in that** when the inner opening edge (54) reaches the open longitudinal edge (13') of the carrying board (13) it transforms into an arc-line (56) running in the opposite direction which approaches the outer opening edge (55) of the entry and discharge element (47) of an adjacent individual opening (45, 46) and transforms into the outer opening edge close to the end element (48).

11. Device in accordance with one of the claims 4 to 10, **characterised in that** the individual openings (30) are assigned to two groups (52, 53) which are mirror-like images with respect to one another, whereby the closed sides (49) of one group (52) of the end elements (48) oppose one end-face (51) of the carrying board (13) and those of the other group (53) oppose the other end face (51).

12. Device in accordance with one of the claims 1 to 11, **characterised in that** the guidance rails (21, 22) demarcate guide ways (23) which, at the entry ends adjoining the bottle feeding station (1) lie opposite the necks (25) of the bottles (8) in contact with one another in the row (9), in the area (26) adjacent to the entry ends of the guide rails (21, 22), the guide ways (23) move towards one another along a curved track to produce separation distances between one another which correspond to a pre-determined separation distance between the necks (25) of the bottles (8) within a row (9) in the processing station and that in the area (27) of the exit ends of the guide rails (21 / 22) of the carrying board adjoining the bottle release station (7) the guide rails (25) move towards one another along a curved track so that, when released, the bottles (8) within a row (9) assume positions where they are in contact with one another again.

## Revendications

1. Dispositif de transport de bouteilles avec un anneau support prévu dans la zone du col, en particulier de bouteilles en PET, le long d'un chemin de mouvement prédéterminé à travers des postes de travail (2, 3, 4, 5, 6) d'une installation de traitement, en particulier d'une installation de remplissage de bouteilles, dans laquelle à chaque fois un nombre de bouteilles (8) sont groupées en une rangée (9) transversale par rapport au sens du mouvement (20), transportées par un support (13) et positionnées relativement par rapport à celui-ci, les supports (13) pouvant se déplacer au moyen de chaînes de transport (11) ou d'un moyen d'entraînement de ce type à des distances uniformes l'un derrière l'autre depuis un poste de pose (1) de bouteilles, en passant par au moins un poste de travail, en particulier un poste de remplissage, vers un poste de remise de bouteilles (7) et pouvant de là retourner vides au poste de pose (1) de bouteilles et un listeau support (13) plat en forme de planche cellulaire étant prévu en tant que support pour une rangée (9) de bouteilles (8), chaque bouteille (8) s'appuyant par suspension au moyen d'un anneau support (24) sur son col (25) dans une ouverture (16; 30) du listeau support (13), qui empiète sur le bord d'ouverture de l'ouverture (16 ; 30) dans le listeau support (13), **caractérisé en ce que** des listeaux de guidage (21, 22) parallèles au plan de mouvement (15) disposés parallèlement les uns à côté des autres sont prévus au-dessus du plan de mouvement (15) des listeaux support (13) sur leur parcours entre le poste de pose et de remise (1 ; 7) de bouteilles, listeaux de guidage qui délimitent entre eux des chemins de guidage (23) pour les parties des bouteilles (8) formant col (25), s'appliquant entre les listeaux de guidage (21 ; 22) et faisant saillie au-dessus des listeaux support (13).

2. Dispositif selon la revendication 1, **caractérisé en ce que** les listeaux support (13) présentent une fente longitudinale (16) ouverte sur un côté, s'étendant essentiellement sur leur longueur totale, qui forme une ouverture pour la réception commune des bouteilles (8) d'une rangée (9) de bouteilles.

3. Dispositif selon la revendication 2, **caractérisé en ce qu'**une butée déplaçable (17') est affectée à l'extrémité fermée (17) de la fente longitudinale (16), butée qui définit la position d'extrémité de la première des bouteilles (8) de la rangée (9) de bouteilles transportées l'une derrière l'autre depuis ledit côté dans la fente longitudinale (16) du listeau support (13).

4. Dispositif selon la revendication 1, **caractérisé en ce que** les listeaux support (13) présentent un nombre d'ouvertures individuelles (30 ; 45 ; 46) pour les bouteilles (8), correspondant au nombre des bouteilles (8) dans une rangée (9).

5. Dispositif selon la revendication 4, **caractérisé en ce que** les ouvertures individuelles présentent une partie d'entrée et de sortie (31 ; 47) partant d'une arête de bord longitudinal (13') et une partie d'extrémité (32 ; 48) pour recevoir les parties de bouteilles formant col (25) pour le transport.

6. Dispositif selon la revendication 5, **caractérisé en ce que** les ouvertures individuelles (30) sont conformées en vue en plan sous forme de L et présentent une première aile (31) orientée parallèlement au sens du mouvement (20) des listeaux support (13) lors du transport et adjacente à une arête de bord longitudinal (13') du listeau support (13) comme partie d'entrée et de sortie et une seconde aile (32) s'étendant transversalement par rapport au sens du mouvement (20) des listeaux support (13) comme partie d'extrémité.

7. Dispositif selon la revendication 6, **caractérisé en ce que** la partie ouverte de la première aile (31) des ouvertures individuelles (30) sous forme de L est tournée vers l'arête de bord longitudinal antérieure (13') dans le sens du mouvement (20), du listeau support (13).

8. Dispositif selon les revendications 4 ou 5, **caractérisé en ce que** la partie d'extrémité (48) est conformée en tant que siège de transport environ semi-circulaire dont le côté fermé (49) est tourné vers une extrémité frontale (50, 51) du listeau support (13), et la partie d'entrée et de sortie est délimitée par des bords d'ouverture (54, 55) conduisant vers une arête de bord longitudinal (13') de la partie support (13) et formant une fente courbe.

9. Dispositif selon la revendication 8, **caractérisé en ce que** le bord d'ouverture intérieur (54) partant de la partie d'extrémité (48) sur le côté de l'arête de bord longitudinal fermée (13'') du listeau support (13), est guidé en une ligne courbe tirée en longueur vers l'arête de bord longitudinal ouverte (13') du listeau support (13).

10. Dispositif selon la revendication 9, **caractérisé en ce que** le bord d'ouverture intérieur (54) en atteignant l'arête de bord longitudinal ouverte (13') se change en une ligne courbe opposée (56) qui se dirige sur le bord d'ouverture extérieur (55) de la partie d'entrée et de sortie (47) d'une ouverture individuelle voisine (45, 46) et se change à proximité de la partie d'extrémité (48) en bord d'ouverture extérieur (55).

11. Dispositif selon l'une quelconque des revendications 4 à 10, **caractérisé en ce que** les ouvertures individuelles (30) sont affectées à deux groupes (52, 53) orientés spéculairement l'un par rapport à l'autre, les côtés fermés (49) des parties d'extrémité (48) d'un groupe (52) étant tournés vers une extrémité frontale (50) et ceux de l'autre groupe (53) étant tournés vers l'autre extrémité frontale (51) du listeau support (13).

12. Dispositif selon l'une quelconque des revendications 1 à 11, **caractérisé en ce que** les listeaux de guidage (21, 22) délimitent des chemins de guidage (23) qui font face à leurs extrémités d'entrée voisines du poste de pose (1) de bouteilles aux cols (25) de bouteille de bouteilles (8) adjacentes les unes aux autres dans la rangée (9), les chemins de guidage (23) passent dans la zone adjacente (26) aux extrémités d'entrée des listeaux de guidages (21, 22) par un tracé courbe à des distances des uns par rapport aux autres, qui correspondent à une mesure prédéterminée de distance des cols de bouteille (25) des bouteilles (8) d'une rangée (9) dans les postes de travail, et **en ce que** dans la zone (27) des extrémités de sortie des listeaux de guidage (21, 22) adjacentes au poste de remise de bouteilles (7) les chemins de guidage (23) sont réunis par un tracé courbe de sorte que les bouteilles (8) d'une rangée (9) prennent à nouveau une position adjacente les unes aux autres lors de la remise.
